# EUROPEAN PATENT SPECIFICATION

(11) **EP 1 874 988 B1**
(45) Date of publication and mention of the grant of the patent: **06.06.2012**
(21) Application number: 06724309.7
(22) Date of filing: 13.04.2006
(51) Int. Cl.: D03D 1/00, B60R 22/00, A62B 35/00

(54) **A WEBBING BELT**
GURT
CEINTURE TISSEE

(30) Priority: 26.04.2005 GB 0508437
(43) Date of publication of application: 09.01.2008
(73) Proprietor: AUTOLIV DEVELOPMENT AB, 447 83 Vargarda (SE)
(72) Inventor: VALKENBURG, Jan-Huibert, NL-5211 HD 's-Hertogenbosch (NL); TIELEMANS, Jac, NH-5283 AH Boxtel (NL); VAN HAAREN, Piet, NL-5298 AS Liempde (NL)
(74) Representative: Beattie, Alex Thomas Stewart
(86) International application number: PCT/EP2006/003413
(87) International publication number: WO 2006/114207

(56) References cited:
- EP-A- 0 116 866
- EP-A- 0 296 670
- EP-A- 1 643 024
- WO-A-01/48285
- WO-A-2004/048658
- AU-A1- 2004 218 633
- GB-A- 1 430 404
- GB-A- 2 040 326
- US-A- 4 007 763
- US-A- 4 660 605
- US-A- 4 981 161
- US-A- 6 085 802
- US-A- 6 112 775
- US-A1- 2005 139 341

## Description

**THE PRESENT INVENTION** relates to a webbing belt, and more particularly relates to a webbing belt suitable for use as a safety-belt in a motor vehicle.

Webbing belts are used as safety-belts in motor vehicles and also in air-craft, but webbing belts also find other applications, for example, as safety-belts for climbers.

Webbing belts, especially webbing belts as use as seat-belts are typically woven from warp and weft yarns, with the warp and weft yarns being multifilament yarns. Belts formed using such a technique will be very soft.

It is desirable to make a webbing belt which is relatively stiff in the transverse direction, especially when the belt is to be used as a safety-belt, to spread the load which is applied to the belt when an accident occurs. Transverse stiffness can be obtained in a belt by using weft yarns which are not of a multifilament construction, but which, instead, are monofilament weft yarns.

A problem that arises when using monofilament weft yarns in the manufacture of a belt is that the edges of the belt will be very hard. This is clearly undesirable, especially in the context of a belt which is to be used as a seat-belt in a motor vehicle.

It has been proposed before to provide a relatively soft edge for a belt which has monofilament weft yarns, by using an extra weft yarn and a knitting process at the edge portion. An arrangement of this type is disclosed is WO 01/48285. Because this technique requires the use of an extra weft yarn and an additional operation, the technique is relatively costly and time-consuming.

It has also been proposed to use two weft yarns in parallel, namely a monofilament yarn and a multifilament yarn. The monofilament yarns are woven in such a way that the monofilament yarns are always spaced a predetermined distance from the edge of the belt. Thus, in the edge region of the belt, there are only the relatively soft multifilament yarns. This arrangement is relatively complicated and requires the provision of additional weft yarns.

It has also been proposed to weave a soft profile at the edge of the belt, as shown in DE 2,446,837, and it has even been proposed to weave a loop of fabric at the edge of the belt to obtain a hollow section, as shown in DE 2,508,732. All of these arrangements require special weaving apparatus or provide an edge portion of a greater thickness than the central region of a belt. This is clearly undesirable, especially where the belt is to be wound on to a retractor spool.

The present invention seeks to provide an improved belt.

According to the present invention, there is provided a webbing belt, the webbing belt being formed from weft yarns and warp yarns, the weft yarns extending transversally from side to side of the belt and the warp yarns extending longitudinally of the belt, wherein a monofilament thread is provided in combination with at least one multifilament thread the or each multifilament thread is twisted around the monofilament thread to form the weft yarns.

Conveniently, a plurality of multifilament threads are provided, the multifilament threads all being twisted around the monofilament thread to form the weft yarns.

Alternatively, a plurality of multifilament threads are provided which are braided about the monofilament thread to form the weft yarns.

Preferably, a belt in accordance with the invention may be in the form of a vehicle safety-belt.

In order that the invention may be more readily understood, and so that further features thereof may be appreciated, the invention will now be described, by way of example, with reference to the accompanying drawings in which:
FIGURE 1 is a diagrammatic view of part of a safety belt,
FIGURE 2 is a diagrammatic view of one form of weft yarn,
FIGURE 3 is a diagrammatic view of an alternative form of weft yarn,
FIGURE 4 is a view of another form of weft yarn,
FIGURE 5 is a view of yet another form of weft yarn, and
FIGURE 6 is a view of yet another form of weft yarn.

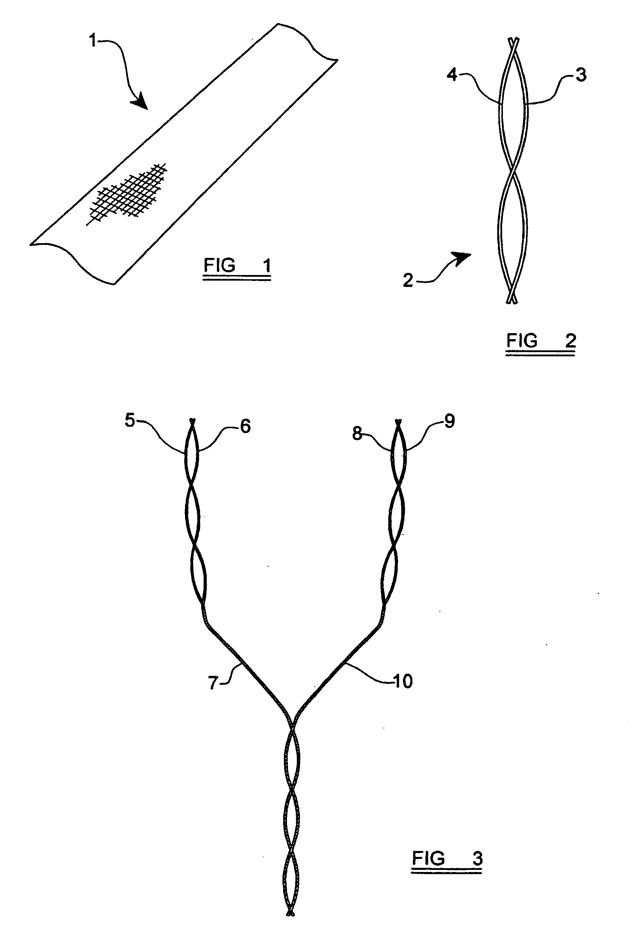

Figure 1 illustrates a safety belt 1 formed in accordance with the invention. The safety belt is a webbing belt formed from transversally extending weft yarns, which extend from one side edge to the other side edge of the safety belt and relatively long warp yarns which extend from one end towards the other end of the safety belt.

The weft yarns are composite weft yarns selected so that the webbing belt is relatively stiff in the transverse direction. This will assist in spreading the load which is applied to the belt when an accident occurs. Also, if the belt is relatively stiff, the webbing will exhibit a good behaviour during extraction from a retractor and during retraction into the retractor. The webbing is selected to increase the lateral stiffness of the webbing, which will assist in preventing the webbing from roping and/or twisting in the tongue that is conventionally mounted on the webbing of a safety belt or in the pillar loop adjuster.

Instead of using a special edge construction to cover the return points of a relatively hard monofil weft yarn, in embodiments of the invention, as will be described below, a weft yarn is used which although presenting a desired relatively stiff characteristic, does not give rise to the "hard edge" problem described above.

In embodiments of the invention the weft yarn is a yarn which has a multifil characteristic, and the composite yarn is formed from a monofilament thread which is in combination with at least one other thread. The weft is formed by providing at least one monofilament in combination with at least one multifilament yarn. The resultant weft is used to form the weft of the belt with the weft extending from one longitudinal edge to the other longitudinal edge of the seat-belt.

Referring initially to Figure 2, not forming part of the invention, a yarn which is suitable for use as a weft in a seat-belt of the type shown in Figure 1 consists of two monofilament threads 3,4 each of which has a diameter of 0.05 - 0.30 millimetres, the thread being simply twisted together to create a weft.

Figure 3 illustrates a more complicated weft in which two monofilament threads 5,6 each having a diameter of 0.05 - 0.30 millimetres are twisted together to form a first composite thread 7, and two corresponding monofil threads 7,8 are twisted together, in the same sense, to form another intermediate thread 10. The two intermediate threads 7 and 10 are twisted together, in the opposite sense, to form a single composite weft.

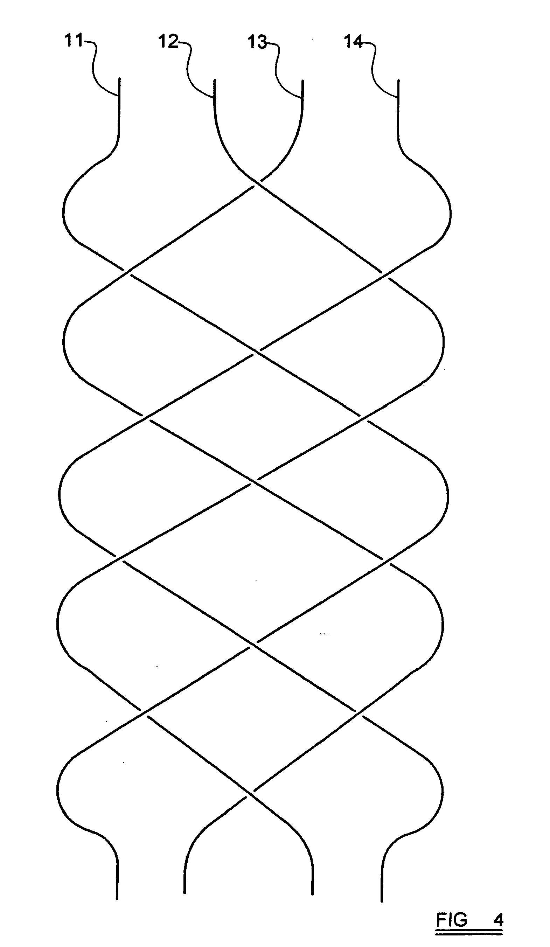

Figure 4 illustrates a further embodiment not forming part of the invention in which four monofil threads 11,12,13,14 are braided together to form a single weft.

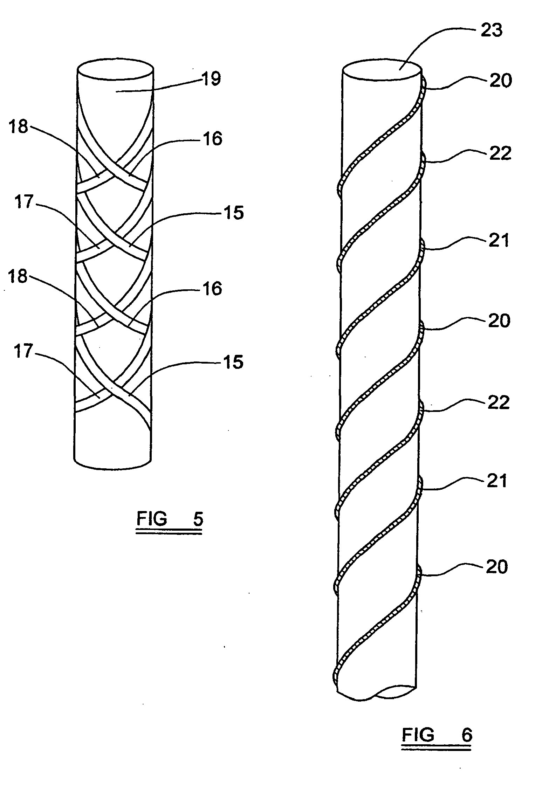

Figure 5 illustrates an embodiment of the invention in which four multifilament threads 15,16,17,18 are braided about a single central monofil thread 19 which acts as a core, to create a weft.

Figure 6 illustrates a further embodiment of the invention in which three multifilament threads 20,21,22 are wound around a monofilament core 23 to create a weft. Any appropriate number of multifilament threads may be wound round a single monofilament thread in this way.

Surprisingly it has been found that a safety-belt woven from weft threads of the various types described above have a comfortable edge, without the necessity for a complicated weaving set up. There is no requirement for extra edge threads and there is no requirement for a weft insertion mechanism.

In many embodiments of the invention it has been found that there is a noise reduction of the edge material, and it is believed that this is due to the inclusion of hard monofil threads in combination with multifil threads as the weft, or, where no multifilament threads are used, the relatively fine size of the monofilament threads that have been used.

It has been found that safety-belts made from a weft of the type described above present good characteristics with regard to the contact between the webbing edge and a seat occupant to be protected by the webbing. The edge has been found to be comfortable and nonabrasive.

Furthermore it has been found that in many preferred embodiments of the invention the webbing presents a good "sew-ability" characteristic.

When used in this specification and claims, the terms "comprises" and "comprising" and variations thereof mean that the specified features, steps or integers are included. The terms are not to be interpreted to exclude the presence of other features, steps or components.

## Claims

1. A webbing belt, the webbing belt being formed from weft yarns and warp yarns, the weft yarns extending transversally from side to side of the belt and the warp yarns extending longitudinally of the belt, wherein a monofilament thread (3, 19, 23) is provided in combination with at least one multifilament thread (20.22), **characterised in that** the or each multifilament thread (20-22) is twisted around the monofilament thread (3, 19, 23) to form the weft yarns.

2. A belt according to Claim 1 comprising a plurality of multifilament threads (20-22), the multifilament threads (20-22) all being twisted around the monofilament thread (3, 19, 23) to form the weft yarns.

3. A belt according to Claim 1 comprising a plurality of multifilament threads (15-18) which are braided about the monofilament thread (3, 19, 23) to form the weft yarns.

4. A belt according to any one of the preceding Claims in the form of a vehicle safety-belt.

## Patentansprüche

1. Gurtband, wobei das Gurtband aus Schussgarnen und Kettgarnen ausgebildet ist, die Schussgarne quer von einer Seite zur anderen des Gurts verlaufen und die Kettgarne in Längsrichtung des Gurts verlaufen und ein Monofilamentfaden (3, 19, 23) in Kombination mit zumindest einem Multifilamentfaden (20-22) vorgesehen ist, **dadurch gekennzeichnet, dass** der oder jeder Multifilamentfaden (20-22) um den Monofilamentfaden (3, 19, 23) verzwirnt ist, um die Schussgarne zu bilden.

2. Gurt nach Anspruch 1, umfassend mehrere Multifilamentfäden (20-22), wobei die Multifilamentfäden (20-22) alle um den Monofilamentfaden (3, 19, 23) verzwirnt sind, um die Schussgarne zu bilden.

3. Gurt nach Anspruch 1, umfassend mehrere Multifilamentfäden (15-18), die um den Monofilamentfaden (3, 19, 23) geflochten sind, um die Schussgarne zu bilden.

4. Gurt nach irgendeinem der vorhergehenden Ansprüche in Form eines Fahrzeug-Sicherheitsgurts.

## Revendications

1. Une ceinture tissée, fabriquée avec des fils de trame et des fils de chaîne, les fils de trame s'étendant transversalement d'un bord à l'autre de la ceinture et les fils de chaîne s'étendant dans le sens longitudinal de la ceinture, un fil monofilament (3, 19, 23) étant associé à au moins un fil multifilament (20-22), **se caractérisant par le fait que** le ou les fils multifilament (20-22) sont torsadés autour du fil monofilament (3, 19, 23) pour former les fils de trame.

2. Une ceinture selon la revendication 1 se composant de plusieurs fils multifilament (20-22), les fils multifilament (20-22) étant tous torsadés autour du fil monofilament (3, 19, 23) pour former les fils de trame.

3. Une ceinture selon la revendication 1 se composant de plusieurs fils multifilament (15-18) tressés autour du fil monofilament (3, 19, 23) pour former les fils de trame.

4. Une ceinture selon n'importe laquelle des revendications précédentes, se présentant sous la forme d'une ceinture de sécurité de véhicule.
